# EUROPÄISCHE PATENTANMELDUNG

(11) **EP 4 428 398 A1**
(43) Veröffentlichungstag der Anmeldung: **11.09.2024**
(21) Anmeldenummer: 23160930.6
(22) Anmeldetag: 09.03.2023
(51) Int. Cl.: F16H 55/12, F16H 55/17

(54) **ZAHNRIEMENSCHEIBE**

(71) Anmelder: BRECO Antriebstechnik Breher GmbH & Co. KG, 32457 Porta Westfalica (DE)
(72) Erfinder: STEINERT, Thomas, 32545 Bad Oeynhausen (DE)
(74) Vertreter: Zenz Patentanwälte Partnerschaft mbB

(57) **Zusammenfassung**

Die Erfindung betrifft eine Zahnriemenscheibe (1), aufweisend eine Trägerplatte (2), welche einen kreisförmig verlaufenden Befestigungsrand (4) aufweist, und eine Vielzahl von Segmenten (3), welche um den Befestigungsrand (4) herum angeordnet sind und eine den Befestigungsrand (4) überdeckende Zahnriemen-Kontaktfläche (6) ausbilden, wobei ein jeweiliges Segment (3) über eine Schraubverbindung (7) mit dem Befestigungsrand (4) lösbar verbunden ist, und wobei bei einer Endverschraubung der Schraubverbindung (7) ein jeweiliges Segment (3) an dem Befestigungsrand (4) in einer Endposition fixiert festgelegt ist, dadurch gekennzeichnet, dass bei einer Vorverschraubung der Schraubverbindung (7) zur Einstellung der jeweiligen Endposition ein jeweiliges Segment (3) an dem Befestigungsrand (4) mit Hilfe von Einstellmitteln (9) bewegbar an dem Befestigungsrand (4) vormontiert gehalten ist.

## Beschreibung

Die Erfindung richtet sich auf eine Zahnriemenscheibe eines Zahnriemenantriebs, wobei die Zahnriemenscheibe eine Trägerplatte, welche einen kreisförmig verlaufenden Befestigungsrand aufweist, und eine Vielzahl von Segmenten, welche um den Befestigungsrand herum angeordnet sind und eine den Befestigungsrand überdeckende Zahnriemen-Kontaktfläche ausbilden, aufweist, wobei ein jeweiliges Segment über eine Schraubverbindung mit dem Befestigungsrand lösbar verbunden ist, und wobei bei einer Endverschraubung der Schraubverbindung ein jeweiliges Segment an dem Befestigungsrand in einer Endposition fixiert festgelegt ist.

Solche Zahnriemenscheiben sind bekannt und treiben einen Zahnriemen an, welcher aus einem elastomeren Material besteht und mit seiner verzahnten Außenfläche die Zahnriemenscheibe umlaufend umschlingt, so dass die Verzahnungen von Zahnriemenscheibe und Zahnriemen kämmend ineinandergreifen.

Für den Maschinen- und Anlagenbau ist es Stand der Technik, dass solche Zahnriemenscheiben einstückig und damit als Zerspanteile ausgebildet sind. Diese Zahnriemenscheiben werden in der Einzelfertigung aus Aluminium oder Stahl hergestellt, wobei die Herstellung aus Aluminium aufgrund der kürzeren Zerspanzeiten und der damit geringeren Herstellkosten bevorzugt wird. Lediglich in dem Bereich der Serienfertigung, wie zum Beispiel im Automobilbau, kommen Gussscheiben, Druckgussscheiben oder gespritzte Scheiben als Zahnriemenscheiben zum Einsatz.

Wie bei allen Zerspanteilen nehmen die Herstellkosten von Zahnriemenscheiben mit der Bauteilgröße überproportional zu. Für Durchmesser von Zahnriemenscheiben von bis zu 400mm ist die Herstellung solcher Zahnriemenscheiben noch auf Standard-Drehmaschinen und in Standard-Bearbeitungszentren möglich. Für Durchmesser oberhalb von 400mm werden dagegen Großmaschinen benötigt, die einen signifikant höheren Maschinenstundensatz aufweisen. Hinzu kommt, dass große Zahnriemenscheiben große Rohmaterialkosten aufwerfen. Eine präzise Bearbeitung bedingt bislang, dass eine Zahnriemenscheibe immer "aus dem Vollen" als einstückiges Bauteil hergestellt und nicht selten aus Gewichtsgründen durch Bohrungen erleichtert werden muss.

Eine mehrteilige Zahnriemenscheibe der einleitend beschriebenen Art ist zum Beispiel aus der US 4,031,769 bekannt. Diese Zahnriemenscheibe weist einen ringförmigen Grundkörper mit einem umlaufenden Befestigungsrand auf, auf welchem zwei halbkreisförmige Segmente aufgeschraubt werden, auf deren Außenfläche eine Zahnkontur ausgebildet ist. Der mehrteilige Aufbau dient aber lediglich Wartungszwecken, um ein benutztes Segment mit abgenutzten Zähnen durch ein neues Segment zu ersetzen. Die Probleme hinsichtlich der hohen Herstellkosten bei Zahnriemenscheiben mit großen Durchmessern werden jedoch mit dieser Art des mehrteiligen Aufbaus einer Zahnriemenscheibe nicht gelöst.

Der Erfindung liegt die Aufgabe zugrunde eine Lösung zu schaffen, welche auf konstruktiv einfache Weise eine zu geringen Kosten herstellbare Zahnriemenscheibe eines Zahnriementriebs bereitstellt.

Bei einer Zahnriemenscheibe der eingangs bezeichneten Art wird die Aufgabe erfindungsgemäß dadurch gelöst, dass bei einer Vorverschraubung der Schraubverbindung zur Einstellung der jeweiligen Endposition ein jeweiliges Segment an dem Befestigungsrand mit Hilfe von Einstellmitteln bewegbar an dem Befestigungsrand vormontiert gehalten ist.

Vorteilhafte und zweckmäßige Ausgestaltungen und Weiterbildungen der Erfindung ergeben sich aus den Unteransprüchen.

Durch die Erfindung wird eine Zahnriemenscheibe für einen Zahnriementrieb zur Verfügung gestellt, welche sich durch eine einfache Konstruktion und durch ein besonderes Konzept hinsichtlich der Rundlaufpräzision auszeichnet. Dadurch, dass die Zahnriemenscheibe von einer Trägerplatte und einer Vielzahl von Segmenten gebildet ist, besteht die Möglichkeit, für die Trägerplatte und die Vielzahl von Segmenten ein kostengünstiges Herstellungsverfahren zu wählen, welches für die Trägerplatte ein anderes sein kann als für die Segmente. Durch den mehrteiligen Aufbau ist ein hohes Maß an Flexibilität in jedweder Hinsicht gegeben. Da erfindungsgemäß die Segmente die Zahnriemen-Kontaktfläche ausbilden und bei einer Vorverschraubung der Schraubverbindung an dem Befestigungsrand der Trägerplatte vormoniert gehalten und mit Hilfe von Einstellmitteln bewegbar sind, können die Segmente zur Einstellung ihrer jeweiligen Endposition entsprechend bewegt und ausgerichtet werden, was mit Hilfe einer entsprechenden Lehre durchgeführt werden kann, um die festgelegte Kreisform für die Rundlaufpräzision zu erzielen, bevor dann mittels der Endverschraubung der Schraubverbindung ein jeweiliges Segment an dem Befestigungsrand in seiner Endposition fixiert wird. Im Sinne der Erfindung ist unter einer Vorverschraubung gemeint, dass die Schraubverbindung "handwarm" angezogen und die Segmente bewegbar an der Trägerplatte gehalten sind, wohingegen unter Endverschraubung der Schraubverbindung im Sinne der Erfindung gemeint ist, dass die Schraubverbindung derart fest angezogen ist, dass die Segmente nun unbewegbar an der Trägerplatte befestigt sind.

Zur Ermöglichung von Einstellarbeiten der einzelnen Segmente sieht die Erfindung in besonders vorteilhafter Ausgestaltung vor, dass bei der Vorverschraubung der Schraubverbindung ein jeweiliges Segment mit Hilfe der Einstellmittel in eine Kipprichtung einstellbar und/oder in einer tangentialen Richtung in Bezug auf den Befestigungsrand bewegbar an dem Befestigungsrand gehalten ist.

Die Erfindung sieht in weiterer Ausgestaltung vor, dass die Trägerplatte eine durch Wasserstrahlschneiden erhaltene Metallplatte bzw. Metallscheibe und/oder ein scheibenförmiges Drehteil ist. Bei den hier betrachteten Durchmessern von oberhalb 400mm würde eine kostengünstige Herstellung der Trägerplatte mittels additiver Fertigung nicht möglich sein, da große 3D-Drucker hohe Maschinenstundensätze haben und große 3D-Druck-Teile zu ungenau hergestellt sind. Auch wenn das Wasserstrahlschneiden und das Drehen gewisses Ungenauigkeiten hinsichtlich einer exakten Kreisform der Trägerplatte nach sich ziehen, so überwiegt die einfache und kostengünstige Herstellbarkeit der Trägerplatte. Ungenauigkeiten hinsichtlich der Kreisform werden erfindungsgemäß durch die einstellbaren Segmente kompensiert.

Hinsichtlich einer kostengünstigen Herstellung verhält es sich bei den Segmenten genau anders als bei der Trägerplatte. Da eine Vielzahl von Segmenten erfindungsgemäß an der Trägerplatte angebracht sind und die Segmente in ihrer baulichen Größe wesentlich kleiner als die Trägerplatte ausgebildet sind, kommt als Herstellungsverfahren durchaus der 3D-Druck in Frage, so dass die Erfindung in einer weiteren Ausgestaltung vorsieht, dass ein jeweiliges Segment durch 3D-Druck additiv gefertigt ist.

Als weitere Ausgestaltung der Erfindung kann die Trägerplatte einen Außendurchmesser von wenigstens 400mm aufweisen.

Eine konstruktiv günstige Möglichkeit hinsichtlich der Einstellbarkeit der einzelnen Segmente ist in Ausgestaltung der Erfindung dadurch gegeben, dass die Einstellmittel einen Verzahnungssteg, welcher an einem ersten tangentialen Ende eines jeweiligen Segments ausgebildet ist, und eine Verzahnungsaufnahme, welche an einem zweiten tangentialen Ende eines jeweiligen Segments ausgebildet ist, aufweisen, wobei der Verzahnungssteg eines jeweiligen Segments in der Verzahnungsaufnahme des direkt benachbarten Segments liegend angeordnet ist und der Verzahnungssteg eines jeweiligen Segments mit der Verzahnungsaufnahme des direkt benachbarten Segments formschlüssig verbunden ist.

Die formschlüssige Verbindung eines jeweiligen Segments mit einem benachbarten Segment ist in Ausgestaltung der Erfindung dadurch konstruktiv besonders günstig realisierbar, indem der Verzahnungssteg eines jeweiligen Segments ballig ausgebildet ist.

Hinsichtlich dieser formschlüssigen Verbindung eines jeweiligen Segments mit einem benachbarten Segment sieht die Erfindung in weiterer Ausgestaltung vor, dass die Verzahnungsaufnahme eine Aufnahmetiefe und eine Aufnahmebreite aufweist und dass der Verzahnungssteg eine Steglänge und eine Stegbreite aufweist, wobei die Aufnahmetiefe der Steglänge entspricht.

Für die formschlüssige Verbindung eines jeweiligen Segments mit einem benachbarten Segment ist es in Ausgestaltung auch vorteilhaft, wenn die Aufnahmebreite mit einer konstanten Breite und größer als die Stegbreite ausgebildet ist, wobei die Stegbreite in eine von dem zugehörigen Segment wegweisende Richtung zunimmt.

Zur Einstellbarkeit der einzelnen Segmente gegenüber der Trägerplatte ist es gemäß einer weiteren Ausgestaltung konstruktiv günstig, wenn die Einstellmittel einen Einsteckzapfen, welcher an einem jeweiligen Segment ausgebildet ist und sich in eine radiale Richtung erstreckt, und Einsteckaussparungen, welche in dem Befestigungsrand ausgebildet sind, aufweisen, wobei ein Einsteckzapfen eines jeweiligen Segments in einer einem jeweiligen Segment zugeordneten Einsteckaussparung liegend angeordnet ist und der Einsteckzapfen eines jeweiligen Segments mit der ihm zugeordneten Einsteckaussparung formschlüssig verbunden ist.

Die formschlüssige Verbindung eines jeweiligen Segments mit einem zugeordneten Einsteckzapfen ist in Ausgestaltung der Erfindung dadurch konstruktiv günstig realisierbar, indem der Einsteckzapfen eines jeweiligen Segments ballig ausgebildet ist.

Hinsichtlich dieser formschlüssigen Verbindung eines jeweiligen Segments mit einem zugeordneten Einsteckzapfen sieht die Erfindung in weiterer Ausgestaltung vor, dass der Einsteckzapfen eine Zapfenlänge und eine Zapfenbreite aufweist und dass die Einsteckaussparungen jeweils eine Aussparungstiefe und eine Aussparungsbreite aufweisen, wobei die Zapfenlänge größer als die jeweilige Aussparungstiefe ausgebildet ist.

Für die formschlüssige Verbindung eines jeweiligen Segments mit einem zugeordneten Einsteckzapfen ist es in Ausgestaltung auch vorteilhaft, wenn die jeweilige Aussparungsbreite mit einer konstanten Breite ausgebildet ist und die Zapfenbreite des jeweiligen Einsteckzapfens in eine in die zugeordnete Einsteckaussparung hinein weisende Richtung zunimmt.

Die Erfindung sieht in weiterer Ausgestaltung vor, dass die Schraubverbindung für ein jeweiliges Segment von zwei Schrauben gebildet ist, welche durch entsprechende Gewindebohrungen in dem Befestigungsrand und durch entsprechende axiale Durchgangslöcher in dem jeweiligen Segment hindurchverlaufend geschraubt bzw. steckt sind, wobei die Durchgangslöcher als sich in radialer Richtung erstreckende Langlöcher ausgebildet sind, so dass bei der Vorverschraubung ein jeweiliges Segment kippbar und/oder bewegbar zu dem Befestigungsrand gehalten ist.

Eine besonders kompakte Bauform ist in Ausgestaltung der Erfindung ferner dadurch realisierbar, dass die Einstellmittel die in den jeweiligen Segmenten ausgebildeten Durchgangslöcher umfassen.

Dadurch, dass die Einstellmittel sowohl an den jeweiligen Segmenten als auch an der Trägerplatte ausgebildet sein können, ergibt sich eine sehr kompakte Bauform, wobei auf zusätzliche Bauteile für die Einstellmittel verzichtet werden kann, was die Montage darüber hinaus erleichtert.

Die Erfindung sieht in weiterer Ausgestaltung vor, dass die Vielzahl von Segmenten einer geraden Gesamtanzahl an Segmenten entspricht, wobei jedes zweite Segment mit einer für einen Zahnriemen ausgebildeten Außenverzahnung ausgebildet ist und die dazwischen liegend angeordneten Segmente jeweils mit einer glatten Außenfläche ausgebildet sind. Mit Hilfe dieser Ausgestaltung, bei welcher jedes zweite Segment glatt und ohne Zähne ausgeführt ist, kann der Einfluss der vielfachen Doppelpassung verkleinert werden. Da immer noch viele Zähne im Eingriff bleiben, wirkt sich der Verlust an übertragbarem Moment hierbei nicht negativ aus.

Die Erfindung sieht ferner ein Verfahren zur Herstellung eines präzisen Rundlaufs einer Zahnriemenscheibe nach einer der vorstehend angesprochenen Ausgestaltungen vor, bei welchem die Schraubverbindung der jeweiligen Segmente derart vorverschraubt werden, dass die jeweiligen Segmente bewegbar an dem Befestigungsrand der Trägerplatte vormontiert sind, wobei die jeweiligen Segmente mit Hilfe eines später im Betrieb eingesetzten Zahnriemens an der Trägerplatte ausgerichtet werden, und wobei nach dem erfolgten Ausrichten der jeweiligen Segmente die Schraubverbindungen der jeweiligen Segmente derart endverschraubt werden, dass die jeweiligen Segmente an dem Befestigungsrand der Trägerplatte in ihrer Endposition fixiert endmontiert sind. Zum Herstellen der Präzision wird erfindungsgemäß der später angetriebene Zahnriemen genutzt, welcher um den lose vormontierten Verbund von Trägerplatte und Segmenten, welche mit "handwarm" angezogenen Schrauben an der Trägerplatte bewegbar gelagert sind, gelegt wird. Die Segmente richten sich an dem später im Betrieb eingesetzten Zahnriemen aus, woraufhin die Schrauben der jeweiligen Schraubenverbindungen endverschraubt und fest angezogen werden. Durch die Nutzung des später im Betrieb verwendeten Zahnriemens bei der Montage wird ein weiteres Problem großer Zahnriemenscheiben gelöst, denn Zahnriemen und Zahnriemenscheibe lassen sich technisch nur mit endlicher Genauigkeit fertigen. Da ein Zahnriemeneingriff auf der Zahnriemenscheibe eine vielfache Doppelpassung darstellt, haben große Zahnriemenscheiben mit vielen Zähnen im Eingriff stets die Probleme, dass die Verzahnung nicht gut passt, der Zahnriemen Laufgeräusche produziert und zum Aufklettern neigt. Da der fehlerbehaftete Zahnriemen somit als Lehre für die Montage und für die Einstellung der einzelnen Segmente eingesetzt wird, wirkt sich sein Längenfehler nicht negativ aus.

Schließlich ist im Hinblick auf eine kostengünstige Herstellung der erfindungsgemäßen Zahnriemenscheibe vorgesehen, dass ein jeweiliges Segment durch 3D-Druck additiv gefertigt wird und/oder dass die Trägerplatte durch Wasserstrahlschneiden hergestellt wird.

Es versteht sich, dass die vorstehend genannten und nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhafte und bevorzugte Ausführungsbeispiele der Erfindung dargestellt sind.

In der Zeichnung zeigt:
Figur 1 eine Perspektivansicht auf eine erfindungsgemäße Zahnriemenscheibe gemäß eines ersten Ausführungsbeispiels,
Figur 2 eine perspektivische Einzelteildarstellung der erfindungsgemäßen Zahnriemenscheibe aus Figur 1, wobei eine Trägerplatte und mehrere Segmente der Zahnriemenscheibe gezeigt sind,
Figur 3 einer Vorderansicht der erfindungsgemäßen Zahnriemenscheibe aus Figur 1,
Figur 4 eine vergrößerte Darstellung eines Ausschnitts aus Figur 3, in welchem ein Segment und dessen benachbarten Segmente und ein Teil der Trägerplatte gezeigt ist,
Figur 5 eine seitliche Schnittansicht für ein an der Trägerplatte angebrachtes Segment,
Figur 6 eine perspektivische Ansicht auf die Trägerplatte der erfindungsgemäßen Zahnriemenscheibe,
Figur 7 eine Vorderansicht auf die Trägerplatte und ein vergrößerter Ausschnitt für die Trägerplatte der erfindungsgemäßen Zahnriemenscheibe,
Figur 8 eine Perspektivansicht auf ein Segment der erfindungsgemäßen Zahnriemenscheibe,
Figur 9 eine weitere Perspektivansicht auf das in Figur 8 gezeigte Segment,
Figur 10 eine Vorderansicht auf das in den Figuren 8 und 9 gezeigte Segment und
Figur 11 eine Perspektivansicht auf eine erfindungsgemäße Zahnriemenscheibe gemäß eines zweiten Ausführungsbeispiels,

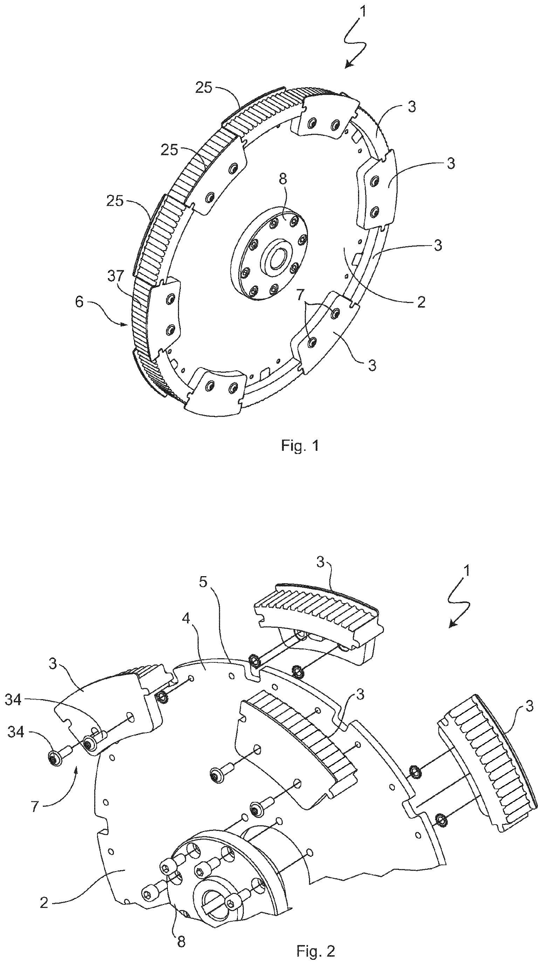

In Figur 1 ist eine Zahnriemenscheibe 1 gemäß eines ersten Ausführungsbeispiels der vorliegenden Erfindung in einer Perspektivansicht dargestellt, wohingegen die Figur 2 eine Einzelteildarstellung einiger Bauteile der erfindungsgemäßen Zahnriemenscheibe 1 zeigt. Wie den Figuren 1 und 2 zu entnehmen ist, weist die erfindungsgemäße Zahnriemenscheibe 1 eine Trägerplatte 2 und eine Vielzahl von Segmenten 3 auf, wobei ein jeweiliges Segment 3 an einem kreisförmig verlaufenden Befestigungsrand 4 der Trägerplatte 2 angeordnet ist. Die Vielzahl von Segmenten 3 sind hintereinanderliegend und umlaufend um einen Umfangsrand 5 der Trägerplatte 2 angeordnet, so dass die Segmente 3 den Befestigungsrand 4 überdecken und eine Zahnriemen-Kontaktfläche 6 ausbilden. Bei diesem Ausführungsbeispiel sind insgesamt zwölf Segmente 3 vorgesehen, welche an der scheibenförmig ausgebildeten Trägerplatte 2 angebracht sind. Dabei ist ein jeweiliges Segment 3 über eine Schraubverbindung 7 mit dem Befestigungsrand 4 lösbar verbunden. Aus Gründen der Übersichtlichkeit ist in den Figuren 1 und 2 jeweils nur eine der Schraubverbindungen 7 mit einem Bezugszeichen versehen. Es sei darauf hingewiesen, dass die Trägerplatte 2 auch von einer scheibenförmigen Ausführung abweichend ausgebildet und Aussparungen zur Gewichtseinsparung aufweisen kann, solange ein kreisförmig verlaufender Befestigungsrand 4 zur Anbringung der Vielzahl von Segmenten 3 vorhanden ist. Die Trägerplatte 2 ist in ihrem Zentrum mit einer Adapterplatte 8 verschraubt, welche mit einer in den Figuren nicht dargestellten Antriebseinheit verbunden ist.

In Figur 1 liegt eine Endverschraubung der Schraubverbindung 7 für ein jeweiliges Segment 3 vor. Mittels der Endverschraubung ist ein jeweiliges Segment 3 an dem Befestigungsrand 4 in einer Endposition fixiert festgelegt. Da es aufgrund geringer Herstellkosten bei einer Trägerplatte 2, welche einen Außendurchmesser von wenigstens 350mm aufweist, von Vorteil ist, wenn die Trägerplatte 2 eine durch Wasserstrahlschneiden erhaltene oder als Drehteil hergestellte Metallplatte ist, ist mit einer gewissen Ungenauigkeit durch den Herstellprozess zu rechnen. Diese Ungenauigkeit schlägt sich in einem Rundheits- und Rundlauffehler der Trägerplatte 2 nieder, so dass die erforderliche Genauigkeit für die Zahnriemenschreibe 1 bei der Montage der Segmente 3 hergestellt wird, indem die Segmente 3 entsprechend eingestellt und ausgerichtet werden. Die jeweiligen Segmente 3 sind im Vergleich zur Trägerplatte 2 wesentlich kleiner ausgebildet und im Hinblick auf die Herstellkosten durch 3D-Druck additiv gefertigt. Das Einstellen und Ausrichten der einzelnen Segmente 3 erfolgt bei einer Vorverschraubung der jeweiligen Schraubverbindungen 7, wobei unter Vorverschraubung zu verstehen ist, dass die Schrauben der Schraubverbindungen 7 "handwarm" angezogen sind, so dass die einzelnen Segmente 3 zwar an der Trägerplatte 2 vormontiert gehalten sind, jedoch eine Bewegung der einzelnen Segmente 3 in eine Endposition möglich ist. Alle Segmente 3 haben dann beim Einstellen und Ausrichten ihre Endposition erreicht, wenn der Rundlauffehler der Zahnriemenscheibe 1 zum Beispiel weniger als 0,2mm beträgt.

Zum Bewegen und Einstellen der jeweiligen Segmente 3 sind Einstellmittel 9 vorgesehen, mit deren Hilfe ein jeweiliges Segment 3 bei der Vorverschraubung der jeweiligen Schraubverbindungen 7 in eine Kipprichtung einstellbar und/oder in einer tangentialen Richtung in Bezug auf den Befestigungsrand 4 bewegbar an dem Befestigungsrand 4 gehalten ist.

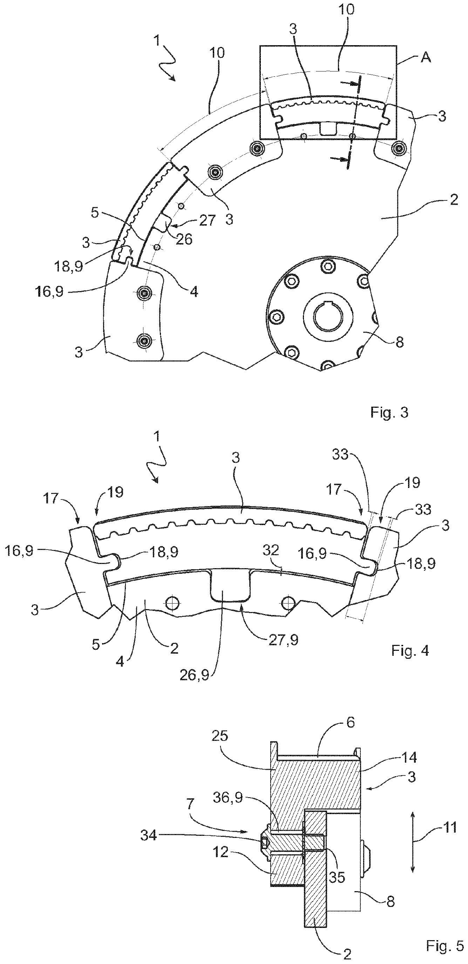

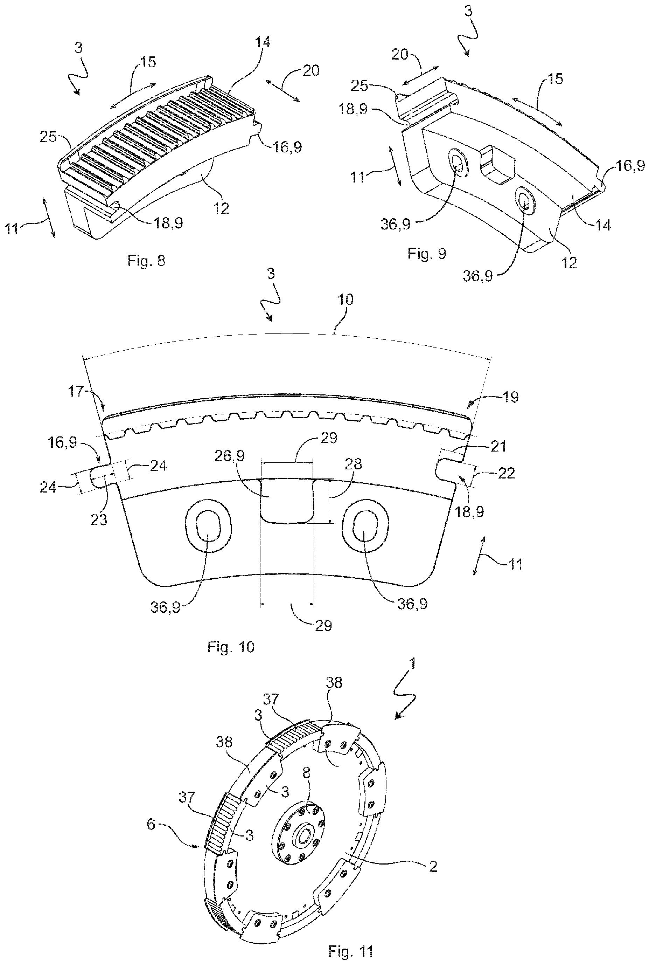

Die Einstellmittel 9 werden nachstehend mit Bezug auf die Figuren 3 bis 10 erläutert. Die Zahnriemenscheibe 1 weist insgesamt zwölf Segmente 3 auf, so dass ein jeweiliges Segment 3 einen Mittelpunktwinkel 10 von 30° aufweist, wie es zum Beispiel aus den Figuren 3 und 10 ersichtlich ist. Es sei angemerkt, dass auch eine andere Gesamtanzahl für die Vielzahl von Segmenten 3 mit einem entsprechend anderen Mittelpunktwinkel 10 vorgesehen sein kann. Ein jeweiliges Segment 3 ist im Querschnitt L-förmig ausgebildet, wie es beispielsweise die Figure 5, 8 und 9 zeigen. Dabei weist ein jeweiliges Segment 3 einen sich in radialer Richtung 11 erstreckenden Befestigungsschenkel 12, welcher zur Befestigung des jeweiligen Segments 3 an der Trägerplatte 2 dient, und einem Zahnriemenkontaktschenkel 14, welcher kreisbogenförmig ausgebildet ist, sich in eine tangentiale Richtung 15 erstreckt und auf welchem der zur Ausrichtung der einzelnen Segmente 3 verwendete und später im Betrieb eingesetzte Zahnriemen aufliegt.

Die Einstellmittel 9 ermöglichen unter anderem, dass die Segmente 3 in der tangentialen Richtung 15 in Bezug auf den Befestigungsrand 4 bewegbar sind. Hierzu weisen die Einstellmittel 9 einen Verzahnungssteg 16, welcher an einem ersten tangentialen Ende 17 eines jeweiligen Segments 3 ausgebildet ist, und eine Verzahnungsaufnahme 18, welche an einem zweiten tangentialen Ende 19 eines jeweiligen Segments 3 ausgebildet ist, auf (siehe zum Beispiel Figure 10). Der Verzahnungssteg 16 eines jeweiligen Segments 3 ist in der Verzahnungsaufnahme 18 des direkt benachbarten Segments 3 liegend angeordnet, wie es beispielsweise Figur 4 zeigt. Der Verzahnungssteg 16 eines jeweiligen Segments 3 ist dadurch mit der Verzahnungsaufnahme 18 des direkt benachbarten Segments 3 formschlüssig verbunden (siehe zum Beispiel Figuren 3 und 4). Wie unter anderem die Figuren 8 und 9 zeigen, sind der Verzahnungssteg 16 und die Verzahnungsaufnahme 18 an dem Zahnriemenkontaktschenkel 14 ausgebildet, wobei sich die Verzahnungsaufnahme 18 schlitzförmig und der Verzahnungssteg 16 stegförmig in eine axiale Richtung 20 erstrecken. Die formschlüssige Verbindung eines Verzahnungssteg 16 eines betrachteten Segments 3 mit der Verzahnungsaufnahme 18 des dem Verzahnungssteg 16 benachbarten Segments 3 ist dadurch realisiert, indem der Verzahnungssteg 16 eines jeweiligen Segments 3 ballig ausgebildet ist. In dem in den Figuren gezeigten Ausführungsbeispiel weist die Verzahnungsaufnahme 18 eine Aufnahmetiefe 21 und eine Aufnahmebreite 22 auf, wohingegen der Verzahnungssteg 16 eine Steglänge 23 und eine Stegbreite 24 aufweist (siehe Figur 10). Dabei entspricht die Aufnahmetiefe 21 der Steglänge 23. Ferner ist die Aufnahmebreite 22 mit einer konstanten Breite und größer als die Stegbreite 24 ausgebildet, wobei die Stegbreite 24 in eine von dem zugehörigen Segment 3 wegweisende Richtung (d.h. in tangentialer Richtung 15) zunimmt, wie es der Figur 10 zu entnehmen ist. In Figur 4 sind die einzelnen Segmente 3 noch nicht ausgerichtet, wobei benachbarte Segmente 3 einen Tangentialspalt 33 aufweisen, welcher zweifach vorhanden ist, nämlich einmal direkt zwischen den Zahnriemenkontaktschenkeln 14 benachbarter Segmente 3 und einmal zwischen der Verzahnungsausnahme 18 und dem darin liegend angeordneten Verzahnungssteg 16. Die Tangentialspalte 33 sind eine relative Bewegung der Segmente 3 zueinander ermöglichend ausgebildet.

Wie ferner zum Beispiel die Figuren 8 und 9 zeigen, ist an dem Zahnriemenkontaktschenkel 14 eines jeweiligen Segments 3 an einer axialen Seite eine Bordscheibe 25 angeformt, um ein abgleiten des Zahnriemens im Betrieb zu verhindern. Die Segmente 3 sind mit ihrem Befestigungsschenkel 12 abwechselnd auf sich gegenüberliegenden Seitenflächen der Trägerplatte 2 angebracht, so dass abschnittweise die Bordscheiben 25 beide Seiten der Zahnriemen-Kontaktfläche 6 begrenzen, wie es zum Beispiel aus der Gesamtansicht der Figur 1 hervorgeht. Es sei angemerkt, dass die mit an einem jeweiligen Segment 3 ausgebildete Bordscheibe 25 eine rein optionale Ausgestaltung darstellt. Ausführungsformen von Segmenten 3 ohne Bordscheibe sind denkbar, wobei dann zum Beispiel an den Segmenten 3 befestigte Blechringe die Zahnriemen-Kontaktfläche 6 begrenzen können.

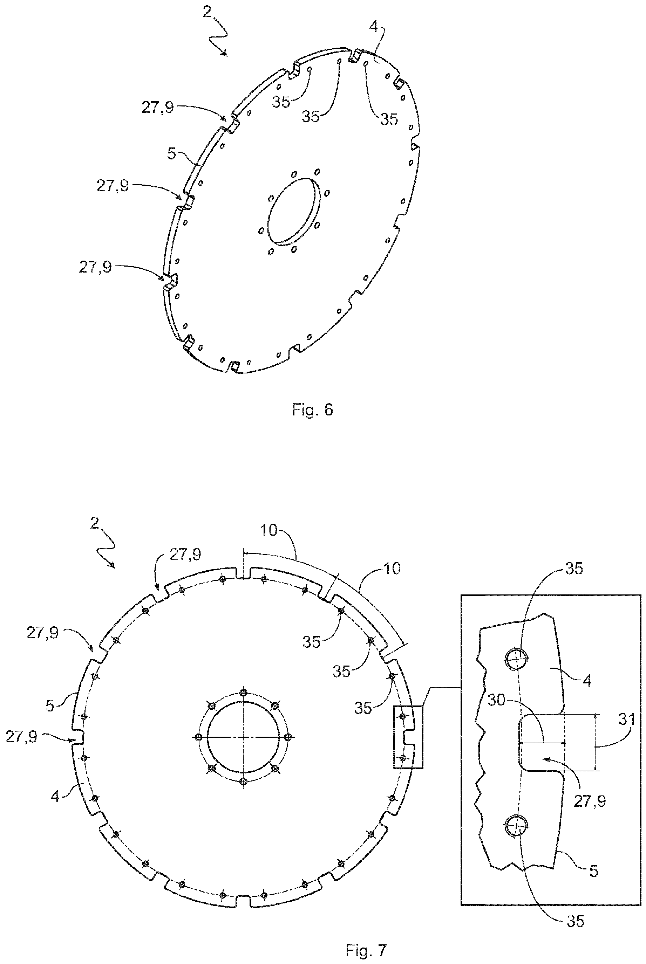

Es sind ferner Einstellmittel 9 vorgesehen, mit deren Hilfe die jeweiligen Segmente 3 bei der Vorverschraubung der jeweiligen Schraubverbindungen 7 in eine Kipprichtung in Bezug auf den Befestigungsrand 4 einstellbar sind. Zu diesem Zweck weisen die Einstellmittel 9 einen Einsteckzapfen 26, welcher an einem jeweiligen Segment 3 ausgebildet ist und sich in die radiale Richtung 11 erstreckt, und Einsteckaussparungen 27, welche in dem Befestigungsrand 4 der Trägerplatte 2 ausgebildet sind, auf. Ein jeweiliger Einsteckzapfen 26 ist als eine Art Stufe an dem Befestigungsschenkel 12 eines Befestigungsschenkel 12 in axialer Richtung 20 hervor, wobei sich der Einsteckzapfen 26 bis zum Zahnriemenkontaktschenkel 14 erstrecken kann, wie es in dem Ausführungsbeispiel gezeigt ist. Dabei ist ein Einsteckzapfen 26 eines jeweiligen Segments 3 in einer dem jeweiligen Segment 3 zugeordneten Einsteckaussparung 27 liegend angeordnet, wobei der Einsteckzapfen 26 eines jeweiligen Segments 3 mit der ihm zugeordneten Einsteckaussparung 27 formschlüssig verbunden ist. Es sind somit zwölf Einsteckaussparungen 27 in radialer Richtung 11 verlaufend in der Trägerplatte 12 ausgebildet, wobei die Einsteckaussparungen 27 um den Umfangsrand 5 herum ausgebildet und entsprechend dem Mittelpunktwinkel 10 in gleichmäßigen Winkelabständen beabstandet angeordnet sind. Die formschlüssige Verbindung kann dabei dadurch realisiert werden, indem der Einsteckzapfen 26 eines jeweiligen Segments 3 ballig ausgebildet ist. Der Einsteckzapfen 26 weist eine Zapfenlänge 28 und eine Zapfenbreite 29 auf (siehe zum Beispiel Figur 10), wohingegen die Einsteckaussparungen 27 jeweils eine Aussparungstiefe 30 und eine Aussparungsbreite 31 aufweisen, wie es beispielsweise in den Figuren 6 und 7 gezeigt ist. Dabei ist die Zapfenlänge 28 größer als die jeweilige Aussparungstiefe 30 ausgebildet, so dass sich ein Radialspalt 32 zwischen dem Zahnriemenkontaktschenkel 14 des Segments 3 und dem Umfangsrand 5 der Trägerplatte 2 ergibt (siehe Figur 4), wodurch das Segment 3 zu der Trägerplatte 2 kippbar ist. Das Segment 3 liegt somit mit seinem Zahnriemenkontaktschenkel 14 nicht auf dem Umfangsrand 5 der Trägerplatte 5 auf, was auch nicht der Fall sein darf, denn der Umfangrand 5 ist bedingt durch das kostengünstige Herstellverfahren mit einem Rundlauffehler versehen. Der Radialspalt 32 ist somit eine Kippbewegung der jeweiligen Segmente 3 ermöglichend ausgebildet. Ferner ist die jeweilige Aussparungsbreite 30 mit einer konstanten Breite ausgebildet, wohingegen die Zapfenbreite 29 des jeweiligen Einsteckzapfens 26 in eine in die zugeordnete Einsteckaussparung 27 hinein weisende Richtung (also in radialer Richtung 11) zunimmt, wie es beispielsweise aus Figur 10 hervorgeht. Für die Schraubverbindung 7 wird Bezug auf die Figuren 2, 5 und 10 genommen, wobei die jeweilige Schraubverbindung 7 ebenso von Bedeutung für ein Verkippen der einzelnen Segmente 3 ist. Die axial verlaufend ausgebildete Schraubverbindung 7 ist für ein jeweiliges Segment 3 von zwei Schrauben 34 gebildet, welche durch entsprechende Gewindebohrungen 35 in dem Befestigungsrand 4 und durch entsprechende, in axialer Richtung 20 verlaufende Durchgangslöcher 36 in dem jeweiligen Segment 3 eingeschraubt bzw. hindurchverlaufend gesteckt sind. Die einzelnen Segmente 3 sind somit mittels der jeweiligen Schraubverbindung 7 an dem Befestigungsrand 4 der Trägerplatte 2 axial angeschraubt und damit kraftschlüssig axial an der Trägerplatte 2 fixiert. Die Durchgangslöcher 36 sind dabei als sich in radialer Richtung 11 erstreckende Langlöcher ausgebildet, wie es zum Beispiel Figur 10 zeigt, so dass bei der Vorverschraubung ein jeweiliges Segment 3 kippbar bzw. bewegbar zu dem Befestigungsrand 4 gehalten ist. Diesbezüglich umfassen die Einstellmittel 9 die in den jeweiligen Segmenten 3 ausgebildeten Durchgangslöcher 36. Der Rundlauffehler des Umfangsrandes 5 der Trägerplatte 2 hat aufgrund der axialen Anbringung der einzelnen Segmente 3 an dem Befestigungsrand 4 keine Relevanz.

In Figur 11 ist eine Zahnriemenscheibe 1 gemäß eines zweiten Ausführungsbeispiels der vorliegenden Erfindung in einer Perspektivansicht dargestellt. Auch bei dem zweiten Ausführungsbeispiel entspricht die Vielzahl von Segmenten 3 einer geraden Gesamtanzahl an Segmenten 3. Im Unterschied zu der in Figur 1 gezeigten Ausführungsform ist jedoch nicht jedes, sondern jedes zweite Segment 3 mit einer für einen Zahnriemen ausgebildeten Außenverzahnung 37 ausgebildet, wobei die dazwischen liegend angeordneten Segmente 3 jeweils mit einer glatten Außenfläche 38 ausgebildet sind.

Zur Herstellung eines präzisen Rundlaufs der vorstehend beschriebenen Zahnriemenscheibe 1 werden die Schraubverbindungen 7 der jeweiligen Segmente 3 derart vorverschraubt werden, dass die jeweiligen Segmente 3 bewegbar an dem Befestigungsrand 4 der Trägerplatte 2 vormontiert sind. Die jeweiligen Segmente 3 werden dann mit Hilfe eines später im Betrieb eingesetzten Zahnriemens an der Trägerplatte 2 ausgerichtet, wobei nach dem erfolgten Ausrichten der jeweiligen Segmente 3 die Schraubverbindungen 7 der jeweiligen Segmente 3 derart endverschraubt werden, dass die jeweiligen Segmente 3 an dem Befestigungsrand 4 der Trägerplatte 2 in ihrer Endposition fixiert endmontiert sind. Ein jeweiliges Segment 3 wird dabei zuvor durch 3D-Druck additiv gefertigt, wobei die Trägerplatte 2 zuvor durch Wasserstrahlschneiden oder durch Drehen hergestellt wird.

Der der Erfindung zugrunde liegende Gedanke baut darauf auf, die Zahnriemenscheibe durch 3D-Druck additiv zu fertigen. Dabei ist es sinnvoll, die Zahnriemenscheibe zu segmentieren und aus mehreren verzahnten Segmenten zusammenzusetzen, da große 3D-Drucker ebenfalls hohe Maschinenstundensätze haben und große 3D-Druck-Teile für einen Einsatz als Zahnriemenscheibe zu ungenau sind. Somit beinhaltet die Erfindung eine Zahnriemenscheibe, welche aus einem metallischen Grundkörper, welcher eine wasserstrahlgeschnittene Scheibe oder ein scheibenförmiges Drehteil sein kann, und aus mehreren verzahnten 3D-Druck-Segmenten zusammengebaut ist. Dabei wird die erforderliche Rundlauf-Genauigkeit bei Montage hergestellt. Um diese Einstellarbeiten auf einfache Weise zu möglichen, muss die Geometrie der verzahnten, 3D-gedruckten Segmente einige Merkmale aufweisen. Die Kreisform und somit der Rundheits- und Rundlauffehler der Zahnriemenscheibe soll durch das Metallteil vorgegeben werden, wobei der Rundheits- und Rundlauffehler ausschließlich von den Segmenten ausgeglichen und kompensiert wird. Die Segmente müssen zu diesem Zweck in tangentialer Richtung in Grenzen beweglich und auch in Kipprichtung einstellbar bleiben. Die Schnittstellengeometrie, mit der die Segmente ineinander und in die Metallscheibe greifen, muss dafür entsprechend ausgeführt sein und kann daher beispielsweise leicht ballig ausgeführt sein. Dies bedingt auch eine kraftschlüssige, nicht etwa formschlüssige Fixierung der Segmente auf der Trägerplatte. Ein Formschluss würde die Einstellbarkeit der einzelnen Segmente verhindern. Erfindungsgemäß werden Ungenauigkeiten in radialer Richtung bei Herstellung der Trägerplatte in Kauf genommen. Die radialen Genauigkeiten in Form von Kreisform und Rundlauf werden bei Montage eingestellt und durch axiales Anschrauben der Segmente kraftschlüssig fixiert. Zum Herstellen der Präzision bzw. radialen Genauigkeiten wird der später angetriebene Zahnriemen genutzt. Er wird um den lose vormontierten Verbund aus Trägerplatte und Segmenten, welche über die "handwarm" angezogenen Schraubverbindungen an der Trägerplatte bewegbar gelagert sind, gelegt. Die Segmente richten sich dann an dem Riemen aus, woraufhin die Schraubverbindungen fest angezogen werden. Durch die Nutzung des später in Betrieb verwendeten Zahnriemens bei der Montage wird ein weiteres Problem großer Zahnriemenscheiben gelöst, denn Zahnriemen und Zahnriemenscheibe lassen sich technisch nur mit endlicher Genauigkeit fertigen. Da ein Zahnriemeneingriff auf der Zahnriemenscheibe eine vielfache Doppelpassung darstellt, haben große Zahnriemenscheiben mit vielen Zähnen im Eingriff stets das Problem, dass die Verzahnung nicht gut passt und der Zahnriemen Laufgeräusche produziert und zum Aufklettern neigt. Da der fehlerbehaftete Zahnriemen quasi als Lehre für die Montage eingesetzt wird, wirkt sich sein Längenfehler nicht negativ aus. Um den Einfluss der vielfachen Doppelpassung zu verkleinern, kann ferner jedes zweite Segment zudem glatt ohne Zähne ausgeführt werden. Da immer noch viele Zähne im Eingriff bleiben, wirkt sich der Verlust an übertragbarem Moment hierbei nicht negativ aus. Mit Hilfe der Zahnriemenscheibe gemäß der Erfindung lassen sich geringere Herstellkosten, ein geringeres Bauteilgewicht und eine bessere Verfügbarkeit bei Zahnriemenscheiben mit sehr großen Durchmessern von mehr als 1m (hierfür sind normalerweise Sondermaschinen erforderlich) erzielen.

Die vorstehend beschriebene Erfindung ist selbstverständlich nicht auf die beschriebenen und dargestellten Ausführungsformen beschränkt. Es ist ersichtlich, dass an den in der Zeichnung dargestellten Ausführungsformen zahlreiche, dem Fachmann entsprechend der beabsichtigten Anwendung naheliegende Abänderungen vorgenommen werden können, ohne dass dadurch der von den Ansprüchen definierte Bereich der Erfindung verlassen wird.

### Bezugszeichenliste

- 1: Zahnriemenscheibe
- 2: Trägerplatte
- 3: Segment
- 4: Befestigungsrand
- 5: Umfangsrand
- 6: Zahnriemen-Kontaktfläche
- 7: Schraubverbindung
- 8: Adapterplatte
- 9: Einstellmittel
- 10: Mittelpunktwinkel
- 11: radiale Richtung
- 12: Befestigungsschenkel
- 14: Zahnriemenkontaktschenkel
- 15: tangentiale Richtung
- 16: Verzahnungssteg
- 17: erstes tangentiales Ende von 3
- 18: Verzahnungsaufnahme
- 19: zweites tangentiales Ende von 3
- 20: axiale Richtung
- 21: Aufnahmetiefe
- 22: Aufnahmebreite
- 23: Steglänge
- 24: Stegbreite
- 25: Bordscheibe
- 26: Einsteckzapfen
- 27: Einsteckaussparungen
- 28: Zapfenlänge
- 29: Zapfenbreite
- 30: Aussparungstiefe
- 31: Aussparungsbreite
- 32: Radialspalt
- 33: Tangentialspalt
- 34: Schrauben
- 35: Gewindebohrungen
- 36: Durchgangslöcher
- 37: Außenverzahnung
- 38: glatte Außenfläche

## Patentansprüche

1. Zahnriemenscheibe (1), aufweisend eine Trägerplatte (2), welche einen kreisförmig verlaufenden Befestigungsrand (4) aufweist, und eine Vielzahl von Segmenten (3), welche um den Befestigungsrand (4) herum angeordnet sind und eine den Befestigungsrand (4) überdeckende Zahnriemen-Kontaktfläche (6) ausbilden, wobei ein jeweiliges Segment (3) über eine Schraubverbindung (7) mit dem Befestigungsrand (4) lösbar verbunden ist, und wobei bei einer Endverschraubung der Schraubverbindung (7) ein jeweiliges Segment (3) an dem Befestigungsrand (4) in einer Endposition fixiert festgelegt ist, **dadurch gekennzeichnet, dass**
bei einer Vorverschraubung der Schraubverbindung (7) zur Einstellung der jeweiligen Endposition ein jeweiliges Segment (3) an dem Befestigungsrand (4) mit Hilfe von Einstellmitteln (9) bewegbar an dem Befestigungsrand (4) vormontiert gehalten ist.

2. Zahnriemenscheibe (1) nach Anspruch 1, **dadurch gekennzeichnet, dass** bei der Vorverschraubung der Schraubverbindung (7) ein jeweiliges Segment (3) mit Hilfe der Einstellmittel (9) in eine Kipprichtung einstellbar und/oder in einer tangentialen Richtung (15) in Bezug auf den Befestigungsrand (4) bewegbar an dem Befestigungsrand (4) gehalten ist.

3. Zahnriemenscheibe (1) nach Anspruch 1 oder 2, **dadurch gekennzeichnet, dass** ein jeweiliges Segment (3) durch 3D-Druck additiv gefertigt ist.

4. Zahnriemenscheibe (1) nach einem der vorhergehenden Ansprüche, **dadurch gekennzeichnet, dass** die Einstellmittel (9) einen Verzahnungssteg (16), welcher an einem ersten tangentialen Ende (17) eines jeweiligen Segments (3) ausgebildet ist, und eine Verzahnungsaufnahme (18), welche an einem zweiten tangentialen Ende (19) eines jeweiligen Segments (3) ausgebildet ist, aufweisen, wobei der Verzahnungssteg (16) eines jeweiligen Segments (3) in der Verzahnungsaufnahme (18) des direkt benachbarten Segments (3) liegend angeordnet ist und der Verzahnungssteg (16) eines jeweiligen Segments (3) mit der Verzahnungsaufnahme (18) des direkt benachbarten Segments (3) formschlüssig verbunden ist.

5. Zahnriemenscheibe (1) nach Anspruch 4, **dadurch gekennzeichnet, dass** der Verzahnungssteg (16) eines jeweiligen Segments (3) ballig ausgebildet ist.

6. Zahnriemenscheibe (1) nach Anspruch 4 oder 5, **dadurch gekennzeichnet, dass** die Verzahnungsaufnahme (18) eine Aufnahmetiefe (21) und eine Aufnahmebreite (22) aufweist und dass der Verzahnungssteg (16) eine Steglänge (23) und eine Stegbreite (24) aufweist, wobei die Aufnahmetiefe (21) der Steglänge (23) entspricht.

7. Zahnriemenscheibe (1) nach Anspruch 6, **dadurch gekennzeichnet, dass** die Aufnahmebreite (22) mit einer konstanten Breite und größer als die Stegbreite (24) ausgebildet ist, wobei die Stegbreite (24) in eine von dem zugehörigen Segment (3) wegweisende Richtung zunimmt.

8. Zahnriemenscheibe (1) nach einem der vorhergehenden Ansprüche, **dadurch gekennzeichnet, dass** die Einstellmittel (9) einen Einsteckzapfen (26), welcher an einem jeweiligen Segment (3) ausgebildet ist und sich in eine radiale Richtung (11) erstreckt, und Einsteckaussparungen (27), welche in dem Befestigungsrand (4) ausgebildet sind, aufweisen, wobei ein Einsteckzapfen (26) eines jeweiligen Segments (3) in einer einem jeweiligen Segment (3) zugeordneten Einsteckaussparung (27) liegend angeordnet ist und der Einsteckzapfen (26) eines jeweiligen Segments (3) mit der ihm zugeordneten Einsteckaussparung (27) formschlüssig verbunden ist.

9. Zahnriemenscheibe (1) nach Anspruch 8, **dadurch gekennzeichnet, dass** der Einsteckzapfen (26) eines jeweiligen Segments (3) ballig ausgebildet ist.

10. Zahnriemenscheibe (1) nach Anspruch 8 oder 9, **dadurch gekennzeichnet, dass** der Einsteckzapfen (26) eine Zapfenlänge (28) und eine Zapfenbreite (29) aufweist und dass die Einsteckaussparungen (27) jeweils eine Aussparungstiefe (30) und eine Aussparungsbreite (31) aufweisen, wobei die Zapfenlänge (28) größer als die jeweilige Aussparungstiefe (30) ausgebildet ist.

11. Zahnriemenscheibe (1) nach Anspruch 10, **dadurch gekennzeichnet, dass** die jeweilige Aussparungsbreite (31) mit einer konstanten Breite ausgebildet ist und die Zapfenbreite (29) des jeweiligen Einsteckzapfens (26) in eine in die zugeordnete Einsteckaussparung (27) hinein weisende Richtung zunimmt.

12. Zahnriemenscheibe (1) nach einem der vorhergehenden Ansprüche, **dadurch gekennzeichnet, dass** die Schraubverbindung (7) für ein jeweiliges Segment (3) von zwei Schrauben (34) gebildet ist, welche durch entsprechende Gewindebohrungen (35) in dem Befestigungsrand (4) und durch entsprechende axiale Durchgangslöcher (36) in dem jeweiligen Segment (3) hindurchverlaufend gesteckt sind, wobei die Durchgangslöcher (36) als sich in radialer Richtung erstreckende Langlöcher ausgebildet sind, so dass bei der Vorverschraubung ein jeweiliges Segment (3) kippbar/bewegbar zu dem Befestigungsrand (4) gehalten ist.

13. Zahnriemenscheibe (1) nach Anspruch 12, **dadurch gekennzeichnet, dass** die Einstellmittel (9) die in den jeweiligen Segmenten (3) ausgebildeten Durchgangslöcher (36) umfassen.

14. Zahnriemenscheibe (1) nach einem der vorhergehenden Ansprüche, **dadurch gekennzeichnet, dass** die Vielzahl von Segmenten (3) einer geraden Gesamtanzahl an Segmenten (3) entspricht, wobei jedes zweite Segment (3) mit einer für einen Zahnriemen ausgebildeten Außenverzahnung (37) ausgebildet ist und die dazwischen liegend angeordneten Segmente (3) jeweils mit einer glatten Außenfläche (38) ausgebildet sind.

15. Verfahren zur Herstellung eines präzisen Rundlaufs einer Zahnriemenscheibe (1) nach einem der Ansprüche 1 bis 14, **dadurch gekennzeichnet, dass** die Schraubverbindungen (7) der jeweiligen Segmente (3) derart vorverschraubt werden, dass die jeweiligen Segmente (3) bewegbar an dem Befestigungsrand (4) der Trägerplatte (2) vormontiert sind, dass die jeweiligen Segmente (3) mit Hilfe eines später im Betrieb eingesetzten Zahnriemens an der Trägerplatte (2) ausgerichtet werden, und dass nach dem erfolgten Ausrichten der jeweiligen Segmente (3) die Schraubverbindungen (7) der jeweiligen Segmente (3) derart endverschraubt werden, dass die jeweiligen Segmente (3) an dem Befestigungsrand (4) der Trägerplatte (2) in ihrer Endposition fixiert endmontiert sind.
